# EUROPÄISCHE PATENTSCHRIFT

(11) **EP 3 598 548 B1**
(45) Veröffentlichungstag und Bekanntmachung des Hinweises auf die Patenterteilung: **03.02.2021**
(21) Anmeldenummer: 19186257.2
(22) Anmeldetag: 15.07.2019
(51) Int. Cl.: H01M 8/0206, H01M 8/0208, H01M 8/0213, H01M 8/0267, H01M 8/04007

(54) **BETRIEBSVERFAHREN FÜR EINE BRENNSTOFFZELLE**
OPERATING METHOD FOR FUEL CELL
PROCÉDÉ DE FONCTIONNEMENT D'UN ÉLÉMENT À COMBUSTIBLE

(30) Priorität: 18.07.2018 DE 102018211982
(43) Veröffentlichungstag der Anmeldung: 22.01.2020
(73) Patentinhaber: Siemens Mobility GmbH, 81739 München (DE)
(72) Erfinder: Peymandar, De-Niang Maria, 91468 Gutenstetten (DE)

(56) Entgegenhaltungen:
- DE-A1-102010 023 021
- JP-A- 2010 061 986
- JP-A- 2015 032 477
- US-A1- 2011 281 192

## Beschreibung

Es wird ein Betriebsverfahren für eine Brennstoffzelle angegeben.

Die Druckschrift EP 2 924 793 A1 betrifft eine Brennstoffzelle.

In der Druckschrift EP 1 238 881 A1 ist ein Schienenfahrzeug angegeben.

Aus den Druckschriften DE 10 2010 023 021 A1, JP 2010-061986 A, US 2011/0281192 A1 und JP 2015-032477 A sind je Brennstoffzellen mit einem Stack aus mehreren Bipolarplatten bekannt, wobei die Bipolarplatten für eine bessere Kühlung MEAs seitlich überragen.

Eine zu lösende Aufgabe liegt darin, ein Betriebsverfahren anzugeben, mit dem eine Brennstoffzelle effizient kühlbar ist.

Diese Aufgabe wird durch ein Betriebsverfahren mit den Merkmalen des unabhängigen Patentanspruchs gelöst. Bevorzugte Weiterbildungen sind Gegenstand der abhängigen Ansprüche.

Die Brennstoffzelle für das hier beschriebene Betriebsverfahren umfasst Bipolarplatten, die aus den übrigen Komponenten der Brennstoffzelle herausragen. Damit ist eine effiziente Kühlung der Brennstoffzelle über die Bipolarplatten möglich. Vorliegend fallen Endplatten einer Brennstoffzelle, welche einen Stapel mit der Elektroden-Membran-Einheit oder mit mehreren Elektroden-Membran-Einheiten und dazwischenliegenden Bipolarplatten begrenzen, der Einfachheit halber unter den Begriff Bipolarplatten, auch wenn es sich bei diesen in elektrischer Hinsicht aufgrund nur einer einzigen Polarität streng genommen nicht um Bipolarplatten handelt und insbesondere dahingehend modifiziert sein können.

Die Brennstoffzelle umfasst mehrere Elektroden-Membran-Einheiten, auch als Membrane Electrode Assembly oder kurz MEA bezeichnet. Die Elektroden-Membran-Einheiten sind dazu eingerichtet, durch die Reaktion von Wasserstoff mit Sauerstoff zu Wasser elektrischen Strom zu erzeugen, sprich, sie sind dazu eingerichtet, die chemische Reaktionsenergie von Wasserstoff und Sauerstoff in elektrische Energie zu wandeln. Bevorzugt liegen die mehreren Eektroden-Membran-Einheiten über die Bipolarplatten elektrisch in Serie geschaltet vor. Bevorzugt liegen viele der Elektroden-Membran-Einheiten elektrisch in Serie geschaltet vor.

Bevorzugt umfasst ein Trägergas den benötigten Wasserstoff. Der Wasserstoff wird aus dem Trägergas heraus umgesetzt. Bevorzugt umfasst das Trägergas den benötigten Wasserstoff. Bei dem Trägergas für Wasserstoff handelt es sich beispielsweise um Wasserstoffgas, kurz H₂. Ebenso ist es möglich, dass als Trägergas für den Wasserstoff Erdgas und/oder Reformatgas dient.

Der Sauerstoff für die Brennstoffzelle entstammt bevorzugt der Umgebungsluft, kann aber auch als reiner Sauerstoff zugeführt werden. Insbesondere ist es beispielsweise bei einem brennstoffzellenbetriebenen Zug möglich, dass der Sauerstoff zum Betreiben der Brennstoffzelle aus einer Luftleitung wie einer Hauptdruckluftleitung zum Betrieb von Bremsen des Zugs stammt.
Die Brennstoffzelle umfasst, abhängig von der Anzahl der Elektroden-Membran-Einheiten, mehr als zwei Bipolarplatten. Die mehreren Bipolarplatten befinden sich je zwischen benachbarten Elektroden-Membran-Einheiten. Über die Bipolarplatten ist eine elektrische Serienverschaltung der Elektroden-Membran-Einheiten gegeben. Die Elektroden-Membran-Einheiten und die Bipolarplatten liegen somit als Stapel, auch Stack genannt, vor.

Die Bipolarplatten dienen unter anderem bevorzugt dazu, die jeweils angrenzenden Elektroden-Membran-Einheiten mit mindestens einem Reaktionsgas zu versorgen, beispielsweise mit Wasserstoffgas und mit Luft. Die Trägergase für Wasserstoff und Sauerstoff werden getrennt voneinander geführt und befinden sich jeweils bevorzugt nur an einer Hauptseite einer Bipolarplatte. Das heißt, an der einen Seite der Bipolarplatte wird der einen angrenzenden Elektroden-Membran-Einheit Luft zugeführt, und an der anderen, der gegenüberliegenden Seite der Bipolarplattte wird der anderen angrenzenden Elektroden-Membran-Einheit H₂-Gas zugeführt. Die Bipolarplatte ist mit entsprechenden Versorgungskanälen für die Gase ausgestattet.

Die Bipolarplatten weisen einen Überstandbereich auf. Der Überstandbereich steht seitlich über die Elektroden-Membran-Einheiten über. Das heißt, der Überstandbereich ragt aus den übrigen Komponenten des Stapels mit den Elektroden-Membran-Einheiten, auch als Stack bezeichnet, hervor. Der Überstandbereich bildet damit einen Vorsprung oder eine Ausstülpung oder einen Sims an der Brennstoffzelle.

Der Überstand ist dazu eingerichtet, von einem Kühlgas umströmt zu werden. Somit ist durch den Überstandbereich eine Kühlung der Brennstoffzelle über das Kühlgas ermöglicht. Brennstoffzellensysteme werden derzeit überwiegend durch externe Kühlaggregate gekühlt. Solche Kühlaggregate reduzieren den Gesamtwirkungsgrad des Brennstoffzellensystems. Bei der hier beschriebenen Brennstoffzelle werden Seiten der Bipolarplatten verlängert, sodass diese aus dem eigentlichen Stack herausstehen. Die modifizierten Bipolarplatten wirken somit als Kühlfinnen.

Durch die Doppelfunktion der Bipolarplatte als Gaszufuhrplatte und als Kühlfinne kann auf ein externes Kühlaggregat verzichtet werden. Damit werden externe Kühlaggregate eingespart. Ein Gesamtwirkungsgrad wird erhöht. Ferner steht damit etwa auf einem Fahrzeug, auf dem sich die Brennstoffzelle befindet, mehr Bauraum anderweitig zur Verfügung, da auf ein Kühlaggregat verzichtet werden kann.
Gemäß zumindest einer Ausführungsform weisen die Bipolarplatten in dem Überstandbereich je mehrere Kühlstrukturen auf. Die Kühlstrukturen sind zum Beispiel durch Kühlfinnen, durch Einkerbungen und/oder durch Wellen gebildet. Der Begriff Welle bedeutet insbesondere, dass ein Grundkörper der Bipolarplatten in dem Überstandbereich verformt ist und in dem Überstandbereich beispielsweise ähnlich einem Wellblech geformt ist.

Gemäß zumindest einer Ausführungsform beträgt in Draufsicht längs einer Stapelrichtung der Elektroden-Membran-Einheiten gesehen eine Fläche des Überstandbereichs mindestens 5 % oder mindestens 10 % oder mindestens 20 % einer Grundfläche der Elektroden-Membran-Einheiten. Alternativ oder zusätzlich liegt die Fläche des Überstandbereichs bei höchstens 100 % oder höchstens 70 % oder höchstens 50 % der Grundfläche der Elektroden-Membran-Einheiten.

Die Brennstoffzelle umfasst somit mehrere der Bipolarplatten, die jeweils zwischen benachbarten Elektroden-Membran-Einheiten angeordnet sind.

Die Bipolarplatten stehen entlang einer Stapelrichtung der Elektroden-Membran-Einheiten im Querschnitt senkrecht zu den Elektroden-Membran-Einheiten insbesondere abwechselnd unterschiedlich weit über die Elektroden-Membran-Einheiten über. Mit anderen Worten überragen die Bipolarplatten die Elektroden-Membran-Einheiten verschieden weit, beispielsweise alternierend. Ein Überstand der Bipolarplatten über die Elektroden-Membran-Einheiten kann entlang der Stapelrichtung auch zuerst zunehmen und dann wieder abnehmen, sodass sich ein dreieckförmiges oder trapezförmiges Profil mit einem größten Überstand insbesondere in der Mitte des Stapels ergibt. Dadurch kann erzielt werden, dass ein Abstand zwischen benachbarten Überstandbereichen vergrößert ist. Somit kann ein Strömungsverhalten des Kühlgases um die Überstandbereiche herum eingestellt werden, wodurch sich ein Kühlverhalten verbessern kann.

Gemäß zumindest einer Ausführungsform umfassen die Bipolarplatten eines oder mehrere der folgenden Materialien oder besteht oder bestehen aus einem oder mehreren der folgenden Materialien: Edelstahl, Graphit, Aluminium, Titan, Graphit-Compound-Thermoplast.

Ein Graphit-Compound-Thermoplast ist ein thermoplastischer Kunststoff wie Polypropylen, der einen hohen Gewichtsanteil an Graphit aufweist. Der Graphit-Gewichtsanteil liegt beispielsweise bei mindestens 70 % oder mindestens 80 % oder mindestens 90 %. Ein Graphit-Compound-Thermoplast ist als Material für die mindestens eine Bipolarplatte besonders bevorzugt.
Gemäß zumindest einer Ausführungsform liegt eine Dicke der Bipolarplatten in dem Überstandbereich oder insgesamt bei mindestens 1 mm und/oder bei höchstens 10 mm oder 5 mm.

Gemäß zumindest einer Ausführungsform ist die Brennstoffzelle für einen trockenen Betrieb eingerichtet. Das heißt, im bestimmungsgemäßen Gebrauch kommt die Brennstoffzelle mit keinen Flüssigkeiten in Berührung. Somit werden sowohl der Sauerstoff als auch der Wasserstoff für die Gewinnung der Elektrizität in der Brennstoffzelle über Gase zugeführt. Außerdem erfolgt eine Kühlung ohne den Einsatz von Kühlflüssigkeiten, sondern ausschließlich über Gase oder Wärmeableitung.

Gemäß dem Betriebsverfahren wird der Überstandbereich der Bipolarplatten luftgekühlt. Das heißt, bei dem Kühlgas handelt es sich um Luft. Die Luft kann turbulent und/oder laminar über den zumindest einen Überstandbereich hinweggeführt werden.

Die Brennstoffzelle ist in einem Fahrzeug verbaut. Bei dem Fahrzeug handelt es sich um einen Zug wie einen Regionalzug, auch als Commuter Train bezeichnet.

Eine bestimmungsgemäße Maximalleistung der Brennstoffzelle liegt bei mindestens 100 kW oder mindestens 150 kW. Alternativ oder zusätzlich liegt die Maximalleistung der Brennstoffzelle bei höchstens 1 MW oder höchstens 500 kW oder höchstens 300 kW. Die Maximalleistung bezieht sich auf eine elektrische Leistungsabgabe der Brennstoffzelle.

Die Brennstoffzelle wird zeitweilig oder dauerhaft durch einen Fahrtwind gekühlt. Das heißt, durch die Fahrgeschwindigkeit des Fahrzeugs wird der Fahrtwind erzeugt und dieser umströmt die Brennstoffzelle zum Kühlen derselben oder liefert einen Strömungsdruck, sodass die Brennstoffzelle umströmt wird.

Nachfolgend werden ein hier beschriebenes Betriebsverfahren und Brennstoffzellen hierfür unter Bezugnahme auf die Zeichnung anhand von Ausführungsbeispielen näher erläutert. Gleiche Bezugszeichen in den verschiedenen Figuren geben dabei jeweils gleiche oder gleich wirkende Elemente an. Es sind dabei jedoch keine maßstäblichen Bezüge dargestellt, vielmehr können einzelne Elemente zum besseren Verständnis übertrieben groß dargestellt sein.

Es zeigen:
- Figuren 1, 2 und 8: schematische Schnittdarstellungen von Brennstoffzellen,
- Figuren 3 und 4: schematische Schnittdarstellungen von Bipolarplatten für Brennstoffzellen,
- Figur 5: eine schematische Seitenansicht auf eine Bipolarplatte für Brennstoffzellen,
- Figur 6: eine schematische Stirnseitenansicht auf eine Bipolarplatte für Brennstoffzelle,
- Figur 7: eine schematische Schnittdarstellung eines hier beschriebenen Betriebsverfahrens für eine Brennstoffzelle in einem Zug,
- Figur 9: eine schematische Draufsicht auf einen elektrischen Anschluss für eine Brennstoffzelle,
- Figur 10: eine schematische Seitenansicht auf einen elektrischen Anschluss für eine Brennstoffzelle, und
- Figur 11: eine schematische Seitenansicht auf eine Bipolarplatte für Brennstoffzellen.

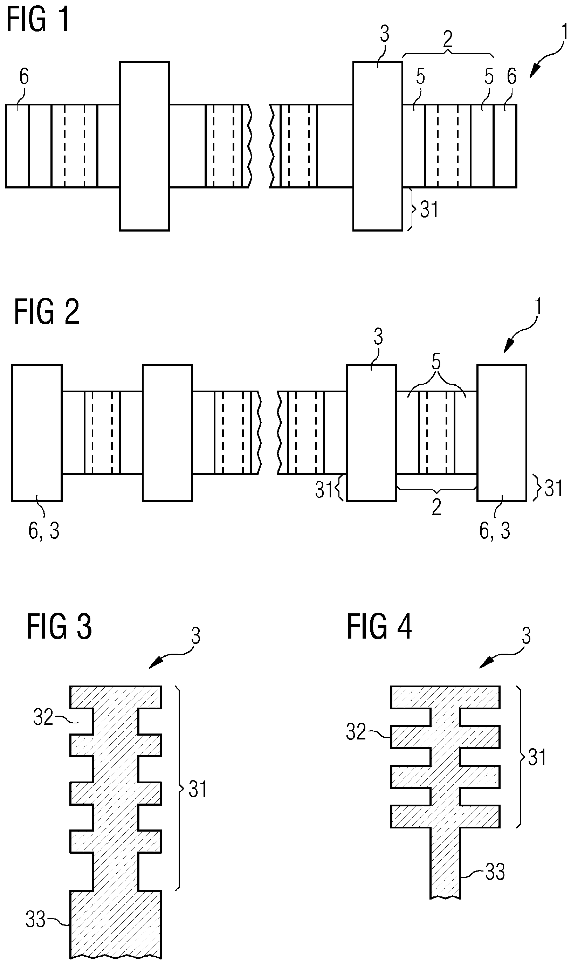

In Figur 1 ist eine Brennstoffzelle 1 dargestellt. Zwischen elektrischen Anschlüssen 6 befinden sich mehrere Elektroden-Membran-Einheiten 2. Bevorzugt sind die Elektroden der Elektroden-Membran-Einheiten 2 jeweils durch Gasdiffusionsschichten 5 gebildet. Zum Beispiel sind mindestens 15 und/oder höchstens 10 der Elektroden-Membran-Einheiten 2 vorhanden.

Zwischen benachbarten Elektroden-Membran-Einheiten 2 befinden sich jeweils Bipolarplatten 3. Über die Bipolarplatten 3 erfolgt eine elektrische Serienschaltung der Elektroden-Membran-Einheiten 2 sowie deren Versorgung mit Reaktionsgasen für Sauerstoff und Wasserstoff. Die Gasversorgung ist in den Figuren zur Vereinfachung der Darstellung nicht gezeichnet. Die Bipolarplatten 3 bilden zusammen mit den Elektroden-Membran-Einheiten 2 einen Stapel, auch als Stack bezeichnet. Beispielsweise sind die Bipolarplatten 3 aus einem Graphit-Compound-Thermoplast und weisen zum Beispiel eine Dicke von ungefähr 3 mm auf.

Die Bipolarplatten 3 ragen über die anderen Komponenten der Brennstoffzelle 2 hinaus. Dadurch wirken die Bipolarplatten 3 als Wärmeableiter und als Kühlfinnen. Somit ist eine effiziente Kühlung der Brennstoffzelle über die Bipolarplatten 3 ermöglicht.

An den elektrischen Anschlüssen 6, die Endteile des Stacks sind, erfolgt ein Abgriff des Stroms, der in der Brennstoffzelle 1 erzeugt wird. Die Anschlüsse 6 können jeweils durch eine Bipolarplatte 3 oder durch eine modifizierte Bipolarplatte 3 gebildet sein. Weiterhin kann durch die Anschlüsse 6 hindurch jeweils eine Versorgung der nächstgelegenen Elektroden-Membran-Einheit mit einem Reaktionsgas, nicht gezeichnet, erfolgen.

Ein Überstandbereich 31 der Bipolarplatten 3, der verbleibende Komponenten der Brennstoffzelle 1 jeweils überragt, weist beispielsweise eine Fläche von ungefähr 25 % einer Grundfläche der Elektroden-Membran-Einheiten 2 auf.

In Figur 2 ist gezeigt, dass die elektrischen Anschlüsse 6 genauso wie die Bipolarplatten 3 als Kühlkörper gestaltet sein können, der die übrigen Komponenten der Brennstoffzelle 1 überragt. Wie auch in Figur 1 können die Anschlüsse 6 durch Bipolarplatten 3 oder durch modifizierte Bipolarplatten 3 gebildet sein. Ein Überstandbereich 31 der Anschlüsse 6 kann genauso groß sein wie an den Bipolarplatten 3. Abweichend von der Darstellung in Figur 2 können die Überstandbereiche 31 der Anschlüsse 6 und der Bipolarplatten 3 auch unterschiedlich groß gestaltet sein.

In Figur 3 ist eine Schnittdarstellung einer Bipolarplatte 3 dargestellt, wobei eine Schnittrichtung parallel zu den Elektroden-Membran-Einheiten 2 verläuft. Gemäß Figur 3 sind in dem Überstandbereich 31, der einen Grundkörper 33 überragt, mehrere Kühlstrukturen 32 geformt. Die Kühlstrukturen 32 sind durch Einkerbungen gebildet. Somit weist die Bipolarplatte 3 in dem Überstandbereich 31 stellenweise eine reduzierte Dicke auf.

Demgegenüber sind die Finnen in Figur 4 durch Erhebungen über den Grundkörper 33 hinaus gebildet. Das heißt, aufgrund der Kühlstrukturen 32 weist die Bipolarplatte 3 in dem Überstandbereich 31 stellenweise eine gegenüber dem Grundkörper 33 vergrößerte Dicke auf.

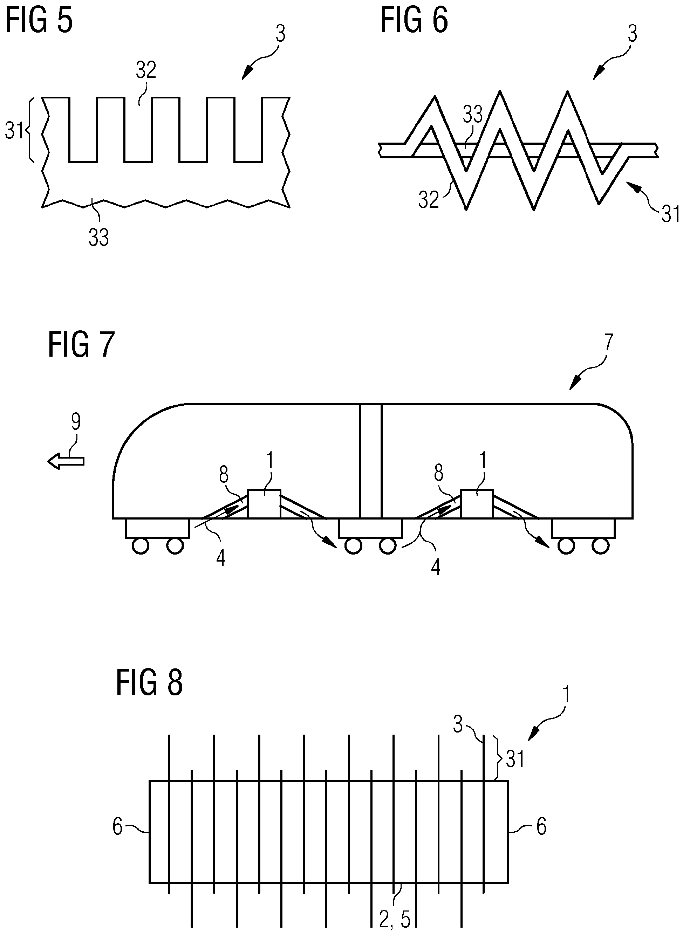

In der Seitenansicht der Bipolarplatte 3 der Figur 5 ist zu sehen, dass die Kühlstrukturen 32 durch Einkerbungen gebildet sind. Die Einkerbungen sind zum Beispiel mittels Stanzen oder Schneiden erzeugt. Es ist möglich, dass der Überstandbereich 31 die gleiche oder eine ähnliche Dicke aufweist wie der Grundkörper 33.

In Figur 6 ist eine Aufsicht auf eine Stirnseite einer Bipolarplatte 3 gezeigt. Der Grundkörper 33 ist als gerade, ebene Platte gestaltet. Demgegenüber weist die Brennstoffzelle 1 in dem Überstandbereich 31 eine wellenartige Struktur auf. Die Wellen, zu denen die Bipolarplatte 3 in den Überstandbereich 31 beispielsweise über Biegen, Stanzen und/oder Pressen geformt ist, bilden die Kühlstrukturen 32.

In Figur 7 ist ein Fahrzeug 7 dargestellt, das eine oder mehrere der Brennstoffzellen 1 umfasst. Das Fahrzeug 7 ist ein Zug wie ein Regionalzug.

Optional können von einer Umgebung des Fahrzeugs 7 hin zu den Brennstoffzellen 1 jeweils Kühlgaszuführungen 8 vorhanden sein. Die Kühlgaszuführungen 8 sind beispielsweise Luftkanäle. Alternativ ist es möglich, dass die Brennstoffzellen 1, anders als in Figur 7 gezeichnet, über einen Basiskörper des Fahrzeugs 7 hinausragen und damit unmittelbar einer Umgebungsluft ausgesetzt sind.

Wird das Fahrzeug 7 betrieben, bewegt es sich entlang einer Fahrtrichtung 9. Aufgrund eines Fahrtwindes erfolgt dann beispielsweise über die Kühlgaszuführungen 8 eine Umströmung und einhergehend eine Kühlung der Brennstoffzellen 1 mittels Luft. Damit ist eine effiziente Luftkühlung der Brennstoffzellen 1 mit Hilfe der Überstandbereiche 31 an den Bipolarplatten 3 ermöglicht.

Durch die Kühlgaszuführungen 8 strömt somit ein Kühlgas 4, das durch Umgebungsluft gebildet ist, zu den Brennstoffzellen 1. Damit kann während der Fahrt des Fahrzeugs 7 ein hoher Luftumsatz und eine ausreichende Luftumströmung an den Brennstoffzellen 1 sichergestellt werden.

Alternativ oder zusätzlich zu Kühlgaszuführungen 8 können auch Ventilatoren oder andere Belüftungseinrichtungen vorhanden sein, die insbesondere eine ausreichende Kühlung der Brennstoffzellen 1 gewährleisten, wenn das Fahrzeug 7 steht. Andererseits ist die Leistungsabgabe der Brennstoffzellen 1 während des Stehens des Fahrzeugs 7 im Regelfall deutlich niedriger als während der Fahrt, sodass eine zusätzliche Kühlung über einen Luftstrom mittels Ventilatoren optional auch gänzlich entfallen kann.

In Figur 8 ist illustriert, dass die Bipolarplatten 3 abwechselnd unterschiedlich weit über die verbleibenden Komponenten der Brennstoffzelle 1 hinausragen. Damit können benachbarte Überstandbereiche 31 einen größeren Abstand zueinander aufweisen. Hierdurch kann eine effizientere Umströmung mit einem Kühlgas 4 wie Luft erreicht werden.

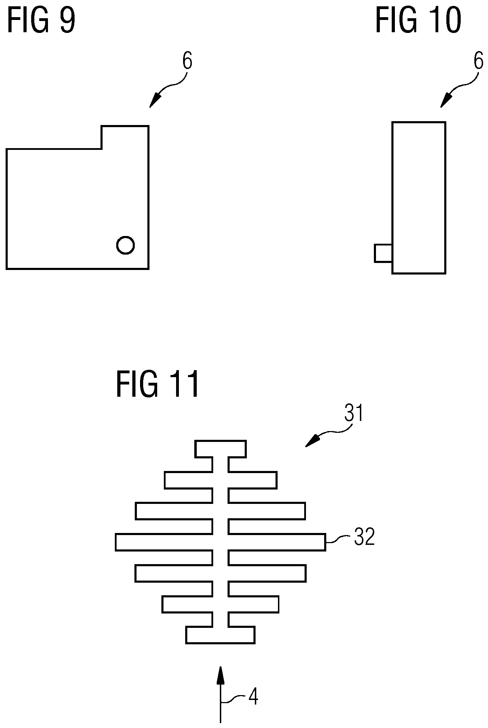

In den Figuren 9 und 10 ist ein elektrischer Anschluss 6 gezeigt. Der Anschluss 6 weist einen Stromabnehmer 61 auf, der bevorzugt über den eigentlichen Stack übersteht. Zudem ist ein Gasport 62 vorhanden, wobei abweichend von Figur 9 auch zwei Gasports vorgesehen sein können. Es ist möglich, dass eine Gasleitung von dem Gasport 62 her bis zum gegenüberliegenden Anschluss 6 oder bis zur am weitesten entfernten Bipolarplatte 3 durchgeschleift wird. Der Gasport 62 kann den Anschluss 6 in Richtung weg von dem Stack, nicht gezeichnet, überragen.

In Figur 11 ist ein weiterer Überstandbereichs 31 illustriert. Die Kühlstrukturen 32 sind strömungsoptimiert angeordnet und als Finnen gestaltet, die unterschiedlich groß sind. Die Kühlstrukturen 32 können in Längsrichtung und/oder in Querrichtung symmetrisch zu jeweiligen Mittelachsen angeordnet sein. Das Kühlgas 4 strömt in der Zeichenebene der Figur 11 bevorzugt von oben nach unten oder umgekehrt, kann aber auch senkrecht zur Zeichenebene geführt werden.

Die Anordnung der Kühlstrukturen 32 eines Überstandsbereichs 31, wie in Figur 11 dargestellt, lässt sich auch auf die Überstandsbereiche 31 mehrerer Bipolarplatten in dem Stack übertragen, sodass die Bipolarplatten insgesamt gemäß der Struktur in Figur 11 angeordnet sein können.

### Bezugszeichenliste

- 1: Brennstoffzelle
- 2: Elektroden-Membran-Einheit
- 3: Bipolarplatte
- 31: Überstandbereich
- 32: Kühlstruktur
- 33: Grundkörper
- 4: Kühlgas
- 5: Gasdiffusionsschicht
- 6: elektrischer Anschluss
- 61: Stromabnehmer
- 62: Gasport
- 7: Fahrzeug
- 8: Kühlgaszuführung
- 9: Fahrtrichtung

## Patentansprüche

1. Betriebsverfahren für eine Brennstoffzelle (1) mit
- mehreren Elektroden-Membran-Einheiten (2),
- mehreren Bipolarplatten (3),
wobei
- die Bipolarplatten (3) je zwischen zwei benachbarten Elektroden-Membran-Einheiten (2) angeordnet sind,
- entlang einer Stapelrichtung der Elektroden-Membran-Einheiten (2) im Querschnitt längs der Stapelrichtung gesehen, die Bipolarplatten (3) in einem Überstandbereich (31) unterschiedlich weit über die Elektroden-Membran-Einheiten (2) überstehen,
- der Überstandbereich (31) dazu eingerichtet ist, von einem Kühlgas (4), das Luft ist, umströmt zu werden, sodass der Überstandbereich (31) der Bipolarplatten (3) luftgekühlt wird,
- die Brennstoffzelle (1) in einem Zug (7) verbaut ist,
- eine Maximalleistung der Brennstoffzelle (1) mindestens 100 kW beträgt, und
- von einer Umgebung des Zugs (7) hin zu der Brennstoffzelle (1) eine Kühlgaszuführung (8) vorhanden ist, die ein Luftkanal ist, sodass die Brennstoffzelle (1) durch einen Fahrtwind gekühlt wird.

2. Betriebsverfahren nach dem vorhergehenden Anspruch,
wobei die Bipolarplatten (3) im Überstandbereich (31) jeweils Kühlstrukturen (32) aufweisen.

3. Betriebsverfahren nach dem vorhergehenden Anspruch,
wobei die Kühlstrukturen (32) durch Kühlfinnen, Einkerbungen und/oder Wellen gebildet sind.

4. Betriebsverfahren nach einem der vorhergehenden Ansprüche,
wobei ein Fläche des Überstandbereichs (31) in Draufsicht auf diesen gesehen zwischen einschließlich 10 % und einschließlich 50 % einer Grundfläche der Elektroden-Membran-Einheiten (2) beträgt.

5. Betriebsverfahren nach einem der vorhergehenden Ansprüche,
wobei entlang der Stapelrichtung der Elektroden-Membran-Einheiten (2) im Querschnitt längs der Stapelrichtung gesehen die Bipolarplatten (3) abwechselnd unterschiedlich weit über die Elektroden-Membran-Einheiten (2) überstehen.

6. Betriebsverfahren nach einem der Ansprüche 1 bis 4,
wobei ein Überstand der Bipolarplatten (3) über die Elektroden-Membran-Einheiten (2) entlang der Stapelrichtung zuerst zunimmt und dann wieder abnimmt, sodass sich ein dreieckförmiges oder trapezförmiges Profil mit einem größten Überstand in einer Mitte eines Stapels der Bipolarplatten (3) und der Elektroden-Membran-Einheiten (2) ergibt.

7. Betriebsverfahren nach einem der vorhergehenden Ansprüche,
wobei mindestens eine der Bipolarplatten (3) eines oder mehrere der folgenden Materialien umfasst oder aus einem oder mehreren der folgenden Materialien ist: Edelstahl, Graphit, Aluminium, Titan, Graphit-Compound-Thermoplast.

8. Betriebsverfahren nach einem der vorhergehenden Ansprüche,
wobei eine Dicke der Bipolarplatten (3) in dem Überstandbereich (31) bei mindestens 1 mm und bei höchstens 10 mm liegt.

9. Betriebsverfahren nach einem der vorhergehenden Ansprüche,
wobei die Brennstoffzelle (1) ausschließlich für einen trockenen Betrieb eingerichtet ist, sodass keine Flüssigkeitskühlung vorgesehen ist.

10. Betriebsverfahren nach einem der vorherigen Ansprüche,
wobei keine zusätzliche Kühlung vorhanden ist, sodass eine Kühlung der Brennstoffzelle (1) ausschließlich aufgrund des Fahrtwinds erfolgt.

11. Betriebsverfahren nach einem der vorhergehenden Ansprüche,
wobei
- mehrere Brennstoffzellen (1) in dem Fahrzeug (7) verbaut sind, und
- die Bipolarplatten (3) auch dazu dienen, die jeweils angrenzenden Elektroden-Membran-Einheiten (2) mit mindestens einem Reaktionsgas zu versorgen, sodass die Bipolarplatten (3) eine Doppelfunktion als Gaszufuhrplatte und als Kühlfinne aufweisen.

## Claims

1. Operating method for a fuel cell (1) with
- a number of electrode membrane units (2),
- a number of bipolar plates (3),
wherein
- each bipolar plate (3) is arranged between two adjacent electrode-membrane-units (2),
- viewed along a stacking direction of the electrode membrane units (2) cross-sectionally along the stacking direction, the bipolar plates (3) in a projection area (31) project to differing degrees beyond the electrode membrane units (2),
- the protrusion area (31) is designed so that cooling gas (4), which is air, circulates around it so that the protrusion area (31) of the bipolar plates (3) is air-cooled,
- the fuel cell (1) is installed in a train (7),
- a maximal power of the fuel cell (1) amounts to at least 100 kW, and
- a cooling gas supply (8) exists from a surrounding area of the train (7) toward the fuel cell (1), which is an air duct, so that the fuel cell (1) is cooled by an airflow.

2. Operating method according to the preceding claim, wherein the bipolar plates (3) in the protrusion area (31) have cooling structures (32) in each case.

3. Operating method according to the preceding claim, wherein the cooling structures (32) are formed by cooling fins, notches and/or shafts.

4. Operating method according to one of the preceding claims, wherein viewed in the top view hereupon, a surface of the protrusion area (31) amounts to between including 10% and including 50% of a base area of the electrode membrane units (2) .

5. Operating method according to one of the preceding claims,
wherein viewed along the stacking direction of the electrode membrane units (2) cross-sectionally along the stacking direction, the bipolar plates (3) protrude alternately to differing degrees beyond the electrode membrane units (2).

6. Operating method according to one of claims 1 to 4, wherein a protrusion of the bipolar plates (3) beyond the electrode membrane units (2) firstly increases along the stacking direction and then reduces again, so that a triangular or trapezoid profile with a largest protrusion is produced in a centre of a stack of the bipolar plates (3) and the electrode membrane units (2).

7. Operating method according to one of the preceding claims, wherein at least one of the bipolar plates (3) comprises one or more of the following materials or is made from one or more of the following materials: stainless steel, graphite, aluminium, titanium, graphite-compound thermoplast.

8. Operating method according to one of the preceding claims, wherein a thickness of the bipolar plates (3) in the protrusion area (31) is at least 1 mm and at most 10 mm.

9. Operating method according to one of the preceding claims, wherein the fuel cell (1) is designed exclusively for a dry operation, so that no liquid cooling is provided.

10. Operating method according to one of the preceding claims, wherein no additional cooling exists, so that a cooling of the fuel cell (1) takes place exclusively on account of the airflow.

11. Operating method according to one of the preceding claims,
wherein
- a number of fuel cells (1) is installed in the vehicle (7), and
- the bipolar plates (3) are also used to supply the respectively adjoining electrode membrane units (2) to at least one reaction gas, so that the bipolar plates (3) have a dual function as a gas supply plate and as a cooling fin.

## Revendications

1. Procédé pour faire fonctionner une pile (1) à combustible, comprenant
- plusieurs unités (2) électrode-membrane,
- plusieurs plaques (3) bipolaires,
dans lequel
- les plaques (3) bipolaires sont disposées chacune entre deux unités (2) électrode-membrane,
- suivant une direction d'empilage, des unités (2) électrode-membrane, considéré en section transversale, suivant la direction d'empilage, les plaques (3) bipolaires dépassent, dans une région (31) de dépassement, différemment, bien au-delà des unités (2) électrode-membrane,
- la partie (31) de dépassement est conçue pour être léchée par un gaz (4) de refroidissement, qui est de l'air, de manière à refroidir par de l'air la partie (31) de dépassement des plaques (3) bipolaires,
- la pile (1) à combustible est employée dans un train (7),
- une puissance maximum de la pile (1) à combustible est d'au moins 100 kW, et
- il y a, des alentours du train (7) à la pile (1) à combustible, un apport (8) de gaz de refroidissement, qui est un conduit pour de l'air, de manière à refroidir la pile (1) à combustible par un vent relatif.

2. Procédé suivant la revendication précédente,
dans lequel les plaques (3) bipolaires ont, dans la partie (31) de dépassement, chacune des structures (32) de refroidissement.

3. Procédé suivant la revendication précédente,
dans lequel les structures (32) de refroidissement sont formées d'ailettes de refroidissement, d'encoches et/ou d'ondulations.

4. Procédé suivant l'une des revendications précédentes,
dans lequel une surface de la partie (31) de dépassement représente, considéré en vue en plan sur celle-ci, entre y compris 10 % et y compris 50 % d'une surface de base des unités (2) électrode-membrane.

5. Procédé suivant l'une des revendications précédentes,
dans lequel, suivant la direction d'empilement des unités (2) électrode-membrane, considéré en section transversale suivant la direction d'empilement, les plaques (3) bipolaires dépassent, en alternance de manière différente, bien au-delà des unités (2) électrode-membrane.

6. Procédé suivant l'une des revendications 1 à 4,
dans lequel un dépassement des plaques (3) bipolaires au-delà des unités (2) électrode-membrane, suivant la direction d'empilement, augmente d'abord, puis rediminue, de manière à obtenir un profil triangulaire ou trapézoïdal ayant un dépassement plus grand au milieu d'un empilement des plaques (3) bipolaires et des unités (2) électrode-membrane.

7. Procédé suivant l'une des revendications précédentes,
dans lequel au moins l'une des plaques (3) bipolaires comprend un ou plusieurs des matériaux suivants ou est en un ou plusieurs des matériaux suivants : acier fin, graphite, aluminium, titane, matière thermoplastique composée avec du graphite.

8. Procédé suivant l'une des revendications précédentes,
dans lequel une épaisseur des plaques (3) bipolaires, dans la partie (31) de dépassement, est d'au moins 1 mm et d'au plus 10 mm.

9. Procédé suivant l'une des revendications précédentes,
dans lequel la pile (1) à combustible est conçue exclusivement pour un fonctionnement à sec, de manière à ce qu'un refroidissement par du liquide ne soit pas prévu.

10. Procédé suivant l'une des revendications précédentes,
dans lequel il n'y a pas de refroidissement supplémentaire, de manière à ce qu'un refroidissement de la pile (1) à combustible se produise exclusivement en raison du vent relatif.

11. Procédé suivant l'une des revendications précédentes,
dans lequel
- plusieurs piles (1) à combustible sont employées dans le véhicule (7), et
- les plaques (3) bipolaires servent aussi à alimenter des unités (2) électrode-membrane voisines en au moins un gaz de réaction, de sorte que les plaques (3) bipolaires ont une fonction double, comme plaque d'apport de gaz et comme ailette de refroidissement.
